# EUROPEAN PATENT APPLICATION

(11) **EP 2 109 027 A1**
(43) Date of publication of application: **14.10.2009**
(21) Application number: 08013099.0
(22) Date of filing: 21.07.2008
(51) Int. Cl.: G06F 1/18

(54) **Computer case set for assembling a liquid crystal screen**

(30) Priority: 11.04.2008 TW 97206169 U
(71) Applicant: Heroic Technology Co., Ltd., Shin Dian City T'ai pei 23141 (TW)
(72) Inventor: Hu, Chih-Chang, Banciao City Taipei County 220 (TW)
(74) Representative: Becker, Eberhard

(57) **Abstract**

A computer case set which provides for hanging and fixing a liquid crystal screen is assembled by a computer case and a screen hanging set, wherein the case is in a cubical shape to contain a computer motherboard, with one of transversal breaths at two sides of the case being provided with the aforementioned screen hanging set, allowing a liquid crystal screen to be hung and fixed by the transversal breath. A bottom of the case, corresponding to the transversal breath, is provided with a platform that is extended forward, allowing a cross section at a side of the case to be roughly in an L-shape, so as to stably support the liquid crystal screen upon hanging and fixing by the case.

## Description

### BACKGROUND OF THE INVENTION

### a) Field of the Invention

The present invention relates to a computer case set, and more particularly to a computer case set which provides for hanging and fixing a liquid crystal screen 30 (LCD) or a liquid crystal TV (LCD TV).

### b) Description of the Prior Art

In recent years, as continuous breakthrough and innovation of computer-related technologies, computers are not only limited to business purposes, but can more deeply go into each family to assist consumers in dealing with all kinds of daily works. For example, a computer barebone system, combining with an audio-video multimedia technology, is positioned in markets, allowing the computer to be introduced into a family living room to serve as a multimedia audio-video center.

For the aforementioned computer barebone system to enter into a domain of home appliances, its computer case is mostly focused on compactness, and thus it is also called a "mini computer" in general. Although the computer barebone system can find another way in the market position to attract a part of consumer groups, it cannot arouse too much desire for purchasing, mainly due to that expandability of the computer barebone system is not sufficient.

As described above, the case of market computer barebone system is mostly focused on the compactness to provide computer and multimedia audio-video services without taking up too much space. However, also due to the compact design, the computer host should be designed specially and cannot share with a motherboard of desktop computer. In addition, as the space is not able to contain too many hard disk drives, memories, CD-ROM drives, high-end display cards (the high-end display cards usually are provided with large coolers and therefore have larger volumes) or other computer peripheral accessories, the market computer barebone system cannot attract the original computer consumers.

On the other hand, another development trend of the computer-related technologies is that a personal computer and its liquid crystal screen, which are normally placed on a desktop, are gradually formed as a dedicated personal multimedia audio-video center to cope with that the liquid crystal screen used for the personal computer has been larger and larger with a specification of an early 15" design to an existing 22" or 26" design. With this trend, the computer can enter into each family with a greater advantage; nevertheless, no computer case on the existing market can be both provided with the expandability of desktop computer and the compactness of computer barebone system.

For example, in market products, a product has been shown up with a thin computer host that is hung on a rear side of a larger liquid crystal screen. This kind of computer host takes up less space, but its expandability is very poor, just like the computer barebone system. Accordingly, how to design a computer case, which can still keep the advantage of expandability of desktop computer and can be provided with the compact feature of computer barebone system without taking up the space, is a target of research and development for the present inventor.

### SUMMARY OF THE INVENTION

The primary object of the present invention is to provide a computer case which is provided with an advantage of expandability of desktop computer and compactness without taking up space, and more particularly a kind of computer case set which provides for assembling a liquid crystal screen, allowing a computer host and the liquid crystal screen to combine as one unit.

Accordingly, the computer case set of the present invention is constituted by a case and a screen hanging set, wherein the case is in a cubical shape to contain a computer motherboard, with one of transversal breadths at two sides of the case facing forward to install the aforementioned screen hanging set, such that a liquid crystal screen can be hung by the transversal breath; and a bottom of the case, corresponding to the transversal breath, is provided with a platform, which is extended forward and an interior of which is provided with a holding space to contain computer peripheral parts, allowing a cross section at a side of the case to be roughly in an L-shape, such that when the liquid crystal screen is hung on the case, the screen can be stably supported.

In implementing, the computer peripheral part that is contained in the platform is preferably heavier equipment, such as a hard disk drive (HDD), a CD-ROM or DVD-ROM, a DVD burner or DVD R/W (Read & Write) drive, or a power supply, so as to increase stability of the case that the liquid crystal screen does not fall out easily upon hanging and fixing, and to place an entrance of CD diskettes of the CD-ROM driver or burner on a panel in front of the platform for facilitating an operation.

Furthermore, a variety of connector on a built-in chip (e.g., an all-in-one chip of a display card and an audio card) or an external expansion card (e.g., a wireless network card or a TV card) in a computer motherboard, can be provided on longitudinal surfaces at two sides of the transversal breadth, to facilitate an user to connect corresponding computer peripheral devices

When implementing the aforementioned screen hanging set, the screen hanging set can be assembled by a first fixing assembly that is fixed on the transversal breath of the case and a second fixing assembly that can be fixed on a rear side of the liquid crystal screen. By mutual assembly and fixation of the first and second fixing assemblies, the liquid crystal screen can be hung and fixed on the aforementioned transversal breath of the case.

Upon implementing, the aforementioned first and second fixing assemblies are provided respectively with a first slide rail and a second slide rail correspondingly, such that the fixing assemblies can slide longitudinally to adjust height of the liquid crystal screen. In addition, the first fixing assembly is provided with an elastic fastener, and the second fixing assembly is provided with a plurality of fastening holes, such that after the height of liquid crystal screen has been adjusted, the liquid crystal screen can be fixed by locking the elastic fastener into one of the fastening holes. To facilitate adjustment, the first fixing assembly is also provided with a pull handle to shift the elastic fastener, allowing a locking state of the elastic fastener with the fastening hole to be released, when the user exerts force on the pull handle.

Compared to the prior art, the present invention provides the computer case set for assembling the liquid crystal screen, allowing the computer host to be combined with the liquid crystal screen as one unit, so that the expandability of desktop computer can be kept, and that the compactness of computer barebone system without taking up space is provided, allowing the computer case set to be applied to the liquid crystal screen (LCD) or a liquid crystal TV (LCD TV), thereby being provided with a best value of utilization.

To enable a further understanding of the said objectives and the technological methods of the invention herein, the brief description of the drawings below is followed by the detailed description of the preferred embodiments.

### BRIEF DESCRIPTION OF THE DRAWINGS

FIG. 1 shows a three-dimensional view of the present invention that is combined with a liquid crystal screen.
FIG. 2 shows an exploded view of the present invention and a liquid crystal screen.
FIG. 3 shows a schematic view of configuration of computer parts inside a case of the present invention.
FIG. 4 shows a schematic view of a case and a screen hanging set of the present invention in assembling with a liquid crystal screen.

### DETAILED DESCRIPTION OF THE PREFERRED EMBODIMENTS

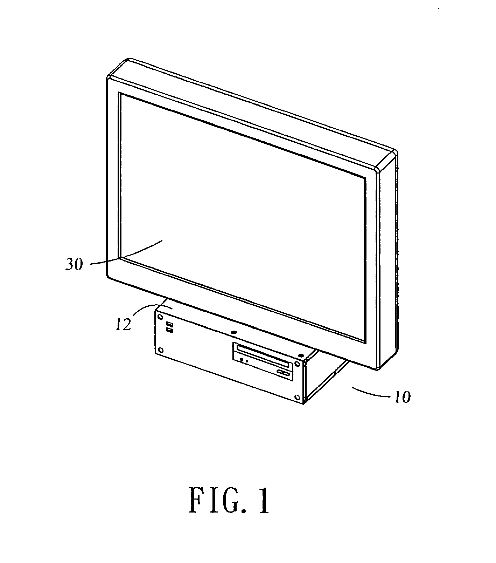

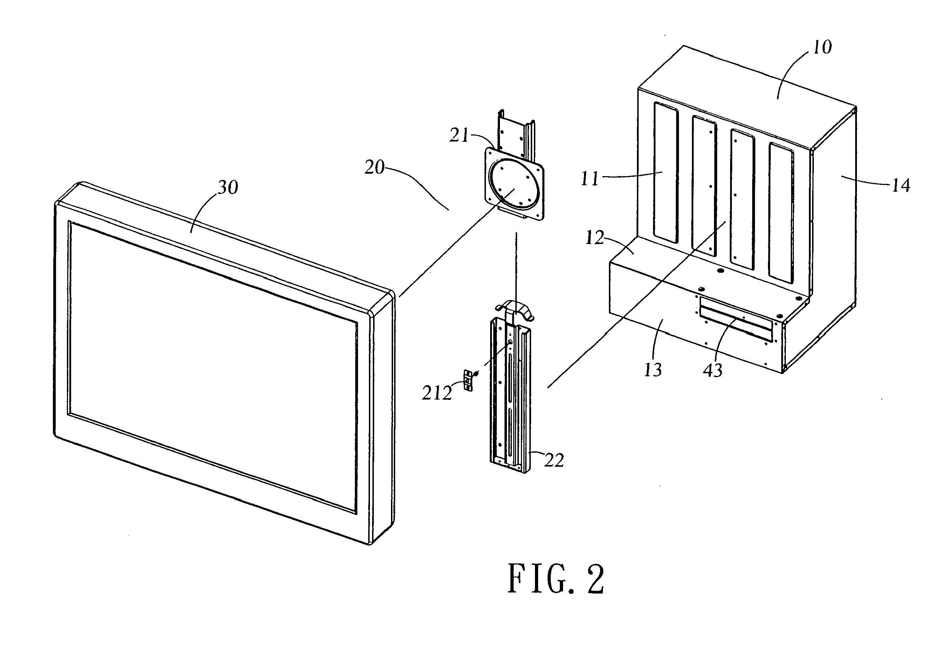

Referring to FIG. 1 and FIG. 2, it shows a three-dimensional view and an exploded view of a preferred embodiment of the present invention after being assembled. A computer case set for assembling a liquid crystal screen, according to the present invention, comprises a case 10 and a screen hanging set 20, wherein the case 10 is in a cubical shape to contain a computer motherboard, with one of transversal breaths 11 at two sides of the case 10 facing forward to install the aforementioned screen hanging set 20, such that a liquid crystal screen 30 can be hung by the transversal breath 11; and a bottom of the case 10, corresponding to the transversal breath 11, is extended forward with a platform 12, an interior of which is provided with a holding space to contain computer peripheral parts, allowing a cross section at a side of the case 10 to be roughly in an L-shape, such that the liquid crystal screen 30 or a liquid crystal TV can be stably supported upon being hung and fixed by the case 10. On the other hand, in addition to that the case 10 and the platform 12 can be made integrally, as shown in the drawings, they can also be made separately and then assembled together as one unit (not shown in the drawings). As a possible assembly structure of the case 10 and the platform 12 belongs to a conventional technology, it is not described further.

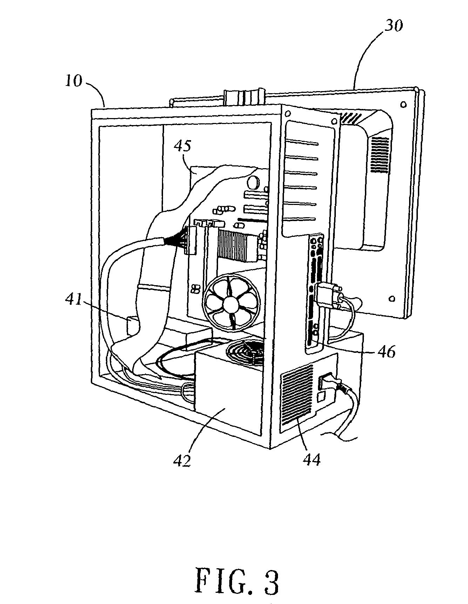

Referring to FIG. 2 and FIG. 3, upon implementing, the computer peripheral part contained in the aforementioned platform 12 is preferably heavier equipment, such as a hard disk drive (HDD), a CD-ROM or DVD-ROM, a DVD burner or DVD R/W (Read & Write) driver 41, or a power supply 42; therefore, when the case 10 is put on a desktop with the platform 12 as a bottom seat, weight of the computer peripheral part can increase the stability of case 10, such that the liquid crystal screen 30 does not fall out easily upon hanging and fixing. In addition, an entrance 43 of CD diskettes of the CD-ROM or burner 41 can be configured on a panel 13 in front of the platform 12, allowing a user to access the CD diskettes from the front side entrance 43, conveniently.

Furthermore, the power supply 42 is located in the platform 12, whereas an air ventilation hole 44 is located at one of longitudinal surfaces 14 at two sides of the transversal breath 11 of case 10, to facilitate ventilating and dissipating heat.

In addition to taking up no space and enabling a computer host to be combined with the liquid crystal screen 30 as one unit, the present invention is also provided with an advantage of expandability of a desktop computer. As shown in the drawings, a variety of connector 46 on a built-in chip (e.g., an all-in-one chip of a display card and an audio card) or an external expansion card (e.g., a wireless network card or a TV card) on a computer motherboard 45 in the case 10, can be provided on longitudinal surfaces 14 at two sides of the transversal breadth 11, to facilitate the user to connect corresponding computer peripheral devices. For example, when the present invention is to be assembled with the liquid crystal screen 30, the connector 46 of a video output can be connected to the liquid crystal screen 30 from the longitudinal surface 14 through a signal wire. Compared to the conventional desktop computer host that the connector is provided at a rear side, the present invention is also provided with an advantage of easy installation.

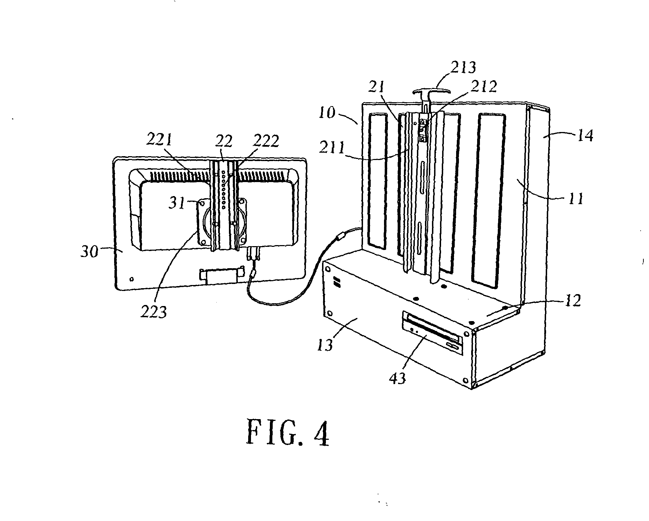

Referring to FIG. 2 and FIG. 4, in implementing the aforementioned screen hanging set 20, the screen hanging set 20 can be assembled by a first fixing assembly 21 that is fixed on the transversal breath 11 of the case 10 and a second fixing assembly 22 that can be fixed on a rear side of the liquid crystal screen 30. By mutual assembly and fixation of the first and second fixing assemblies 21, 22, the liquid crystal screen 30 can be hung and fixed on the aforementioned transversal breath 11 of the case 10.

Upon implementing, the aforementioned first and second fixing assemblies 21, 22 are provided respectively with a first and a second slide rail 211, 221 correspondingly, such that the fixing assemblies 21, 22 can slide longitudinally to adjust height of the liquid crystal screen 30. In addition, the first fixing assembly 21 is provided with an elastic fastener 212, and the second fixing assembly 22 is provided with a plurality of fastening holes 222, such that after the height of liquid crystal screen 30 has been adjusted, the liquid crystal screen 30 can be fixed by locking the elastic fastener 212 into one of the fastening holes 222. On the other hand, in addition to the second slide rail 221, the second fixing assembly 22 can be also assembled with a turntable 223 to be locked on an original wall hole 31 on the liquid crystal screen 30, such that an angle of the liquid crystal screen 30 can be adjusted by the turntable 223.

To facilitate adjustment, the first fixing assembly 21 is also provided with a pull handle 213 to shift the elastic fastener 212, allowing a locking state of the elastic fastener 212 with the fastening hole 222 to be released, when the user exerts force on the pull handle 213.

It is of course to be understood that the embodiments described herein is merely illustrative of the principles of the invention and that a wide variety of modifications thereto may be effected by persons skilled in the art without departing from the spirit and scope of the invention as set forth in the following claims.

## Claims

1. A computer case set for assembling a liquid crystal screen, comprising a case10 and a screen hanging set 20, wherein the case 10 is in a cubical shape to contain a computer motherboard 45, with one of transversal breadths 11 at two sides of the case facing forward to install the aforementioned screen hanging set 20, such that a liquid crystal screen 30 is hung by the transversal breath 11; and a bottom of the case 10, corresponding to the transversal breath 11, is provided with a platform 12, which is extended forward and an interior of which is provided with a holding space to contain computer peripheral parts, allowing a cross section at a side of the case 10 to be roughly in an L-shape, such that when the liquid crystal screen 30 is hung on the case 10, the screen is stably supported.

2. The computer case set for assembling a liquid crystal screen, according to claim 1, wherein the computer peripheral part that is contained in the platform 12 includes a hard disk drive, a CD-ROM drive or burner 41, and a power supply 42.

3. The computer case set for assembling a liquid crystal screen, according to claim 2, wherein an entrance 43 of CD diskettes for the CD-ROM drive or burner 41 is provided on a panel 13 in front of the platform 12, allowing the CD diskettes to be accessed from the front side entrance 43.

4. The computer case set for assembling a liquid crystal screen, according to claim 2, wherein the power supply is located in the platform 12, and an air ventilation hole 44 is located on one of longitudinal surfaces 14 at two sides of the transversal breath 11 of the case 10.

5. The computer case set for assembling a liquid crystal screen, according to claim 1, wherein a variety of connector 46 on a computer motherboard 45 in the case 10 is provided on the longitudinal surfaces 14 at two sides of the transversal breath 11.

6. The computer case set for assembling a liquid crystal screen, according to claim 1, wherein the screen hanging set 20 is constituted by a first fixing assembly 21 that is fixed on the transversal breath 11 of the case 10, and a second fixing assembly 22 that is fixed at a rear side of the liquid crystal screen 30, with the aforementioned first and second fixing assemblies 21, 22 being mutually assembled and fixed, allowing the liquid crystal screen 30 to be hung and fixed on the aforementioned transversal breath11 of the case 10.

7. The computer case set for assembling a liquid crystal screen, according to claim 6, wherein the first and second fixing assemblies 21, 22 are provided respectively with a first slide rail 211 and a second slide rail 221 correspondingly, such that the fixing assemblies 21,22 slide longitudinally to adjust height of the liquid crystal screen 30.

8. The computer case set for assembling a liquid crystal screen, according to claim 6 or 7 wherein the first fixing assembly 21 is provided with an elastic fastener 212, and the second fixing assembly 22 is provided with a plurality of fastening holes 222, with the liquid crystal screen 30 being fixed by locking the elastic fastener 212 into one of the fastening holes 222, after adjusting the height of liquid crystal screen 30.

9. The computer case set for assembling a liquid crystal screen, according to claim 6 or 7, wherein the second fixing assembly 22 is further provided with a turntable 223 that is locked on a wall hole 31 of the liquid crystal screen 30.

10. The computer case set for assembling a liquid crystal screen, according to claim 8, wherein the first fixing assembly 21 is provided with a pull handle 213 to shift the elastic fastener 212 and to release a locking state of the elastic fastener 212 with the fastening hole 222.
